(19) Europäisches Patentamt
European Patent Office
Office européen des brevets

(11) **EP 4 772 270 A1**

(12) **EUROPEAN PATENT APPLICATION**
published in accordance with Art. 153(4) EPC

(43) Date of publication:
**08.07.2026 Bulletin 2026/28**

(21) Application number: 24859236.2

(22) Date of filing: **22.07.2024**

(51) International Patent Classification (IPC):
**B01J 20/28** (2006.01)   **B01J 20/24** (2006.01)
**B01J 20/26** (2006.01)   **B01J 31/26** (2006.01)
**B01J 32/00** (2006.01)   **B01J 35/56** (2024.01)
**B01J 35/60** (2024.01)

(52) Cooperative Patent Classification (CPC):
**B01J 20/24; B01J 20/26; B01J 20/28; B01J 21/00;
B01J 31/26; B01J 35/56; B01J 35/60**

(86) International application number:
**PCT/JP2024/026074**

(87) International publication number:
**WO 2025/047192 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023   JP 2023140985**

(71) Applicant: **Noritake Co., Limited
Nagoya-shi, Aichi 451-8501 (JP)**

(72) Inventors:
• **AOYAMA, Erika
Nagoya-shi, Aichi 451-8501 (JP)**
• **KAWAHARA, Akihiro
Nagoya-shi, Aichi 451-8501 (JP)**
• **GOTO, Takamasa
Nagoya-shi, Aichi 451-8501 (JP)**
• **ITO, Ryoma
Nagoya-shi, Aichi 451-8501 (JP)**

(74) Representative: **Kramer Barske Schmidtchen
Patentanwälte PartG mbB
European Patent Attorneys
Landsberger Strasse 300
80687 München (DE)**

(54) **SUPPORT STRUCTURE**

(57)    The support structure 10 disclosed herein is a support structure 10 for supporting an active material, and comprises a resin matrix 20, porous particles 30 including a plurality of pores 32. The resin matrix 20 has a three-dimensional mesh structure including pores 22, and the porous particles 30 are disposed in the pores 22 of the resin matrix 20.

FIG.2

10µm

EP 4 772 270 A1

**Description**

**Technical Field**

The present invention relates to a support structure for supporting an active material such as an adsorbent and a catalyst. This international patent application claims priority from Japanese Patent Application No. 2023-140985 filed on August 31, 2023, which is hereby incorporated by reference herein in its entirety.

**Background Art**

Exhaust gases emitted from thermal power stations, factories, automobiles, and so on contain various harmful components, and it is required to develop materials and technologies that selectively separate or collect the components. For example, carbon dioxide ($CO_2$) becomes a global warming gas, and the significant reduction in the emissions thereof is therefore urgently needed. In order to efficiently separate and collect such components, a material including an active material, such as an adsorbent and a catalyst, and a support that supports the active material is used. Examples of the technology relating to this include those in Patent Literatures 1 and 2.

Citation List

Patent Literature

Patent Literature 1: National Publication of International Patent Application No. 2014-533195
Patent Literature 2: National Publication of International Patent Application No. 2018-505071

**Summary of Invention**

Technical Problem

Examples of the support that supports an active material, such as an adsorbent and a catalyst include supports of which the base materials are a honeycomb structure and a nonwoven fabric. These supports are disposed on only surfaces of base materials and therefore have a disadvantage of a small amount of supported active material per volume.
Another example of the support that supports an active material, such as an adsorbent and a catalyst, is a structure constituted of support particles. As the support particles, particles with high specific surface area and pore volume can be adopted for increasing the supporting amount. The structure constituted of such support particles is formed by firing support particles or pressing and densifying support particles. Consequently, even if support particles having a high specific surface area or pore volume are adopted, the specific surface area and the pore volume are decreased during the process of forming the structure. As a result, a disadvantage of decreasing the amount of the supported active material is caused. According to the results of investigation by the present inventors, it was found that any support structure having a structure with excellent water absorption can increase the amount of an active material to be introduced and supported, such as an adsorbent and a catalyst.
The present invention has been made in view of the above circumstances, and a main object thereof is to provide a support structure having excellent water absorption.

Solution to Problem

A support structure disclosed herein is a support structure for supporting an active material and includes a resin matrix and porous particles having a plurality of mesopores. The resin matrix has a three-dimensional mesh structure including pores, and the porous particles are disposed in the pores of the resin matrix.
According to such a configuration, since the mesopores of the porous particles are present without being crushed or filled with a resin, the water absorption of the support structure is suitably improved. In addition, the water absorption of the support structure is suitably improved also by the pores of the resin matrix. Consequently, it is possible to realize a support structure that can increase the amount of a supported active material.
In a preferable aspect of the support structure disclosed herein, the resin matrix has an average pore diameter A of 0.5 $\mu$m or more and 10 $\mu$m or less. In another preferable aspect, the porous particles have an average pore diameter B of 10 nm or more and 50 nm or less.
In a particularly preferable aspect, the resin matrix has an average pore diameter A of 0.5 $\mu$m or more and 5 $\mu$m or

less, and the porous particles have an average pore diameter B of 10 nm or more and 40 nm or less.

According to the configuration as above, the water absorption of the support structure can be more suitably improved.

In a preferable aspect of the support structure disclosed herein, the support structure has a ratio of the average pore diameter A of the resin matrix to the average pore diameter B of the porous particles, (A/B), is 20 or more and 200 or less.

According to such a configuration, the support structure with excellent water absorption can be more suitably realized.

In a preferable aspect of the support structure disclosed herein, the support structure has a porosity based on an Archimedes method is 75% or more and 90% or less.

According to such a configuration, it is possible to provide a support structure having suitable water absorption.

In a preferable aspect of the support structure disclosed herein, the support structure has a water absorption rate based on an Archimedes method is 145% or more and 350% or less.

According to such a configuration, a support structure that can improve the yield and separation performance of harmful components is realized.

In a preferable aspect of the support structure disclosed herein, the support structure has a hot water resistance is 120°C or more and 250°C or less.

According to such a configuration, it is possible to provide the support structure also having an excellent hot water resistance.

In a preferable aspect of the support structure disclosed herein, a resin matrix includes a resin having a glass transition temperature of 70°C or more and 250°C or less.

According to such a configuration, it is possible to suitably improve the heat resistance of the support structure.

In a preferable aspect of the support structure disclosed herein, the porous particles include at least one kind selected from the group consisting of silica particles, alumina particles, ceria particles, zirconia particles, and titania particles.

According to such a configuration, it is possible to more suitably support an active material such as an adsorbent and a catalyst.

## Brief Description of Drawings

FIG. 1 is a diagram schematically showing the structure of a support structure according to one embodiment.
FIG. 2 is a cross-sectional FE-SEM image (1000×) showing a cross-section of a support sheet of Example 3.
FIG. 3 is a cross-sectional FE-SEM image (2000×) showing a cross-section of the support sheet of Example 3.

## Description of Embodiments

Preferred embodiments of the technology disclosed herein will be described below. Furthermore, matters necessary for implementation, even if they are matters other than specifically mentioned in the present specification, can be understood based on the technical content taught in the present specification and the general technical common sense of a person skilled in the relative field. The technical content disclosed herein can be implemented based on the content disclosed in the present specification and the technical common sense in the field. In the present specification, the notation "A to B" indicating a range means A or more and B or less.

<Support structure>

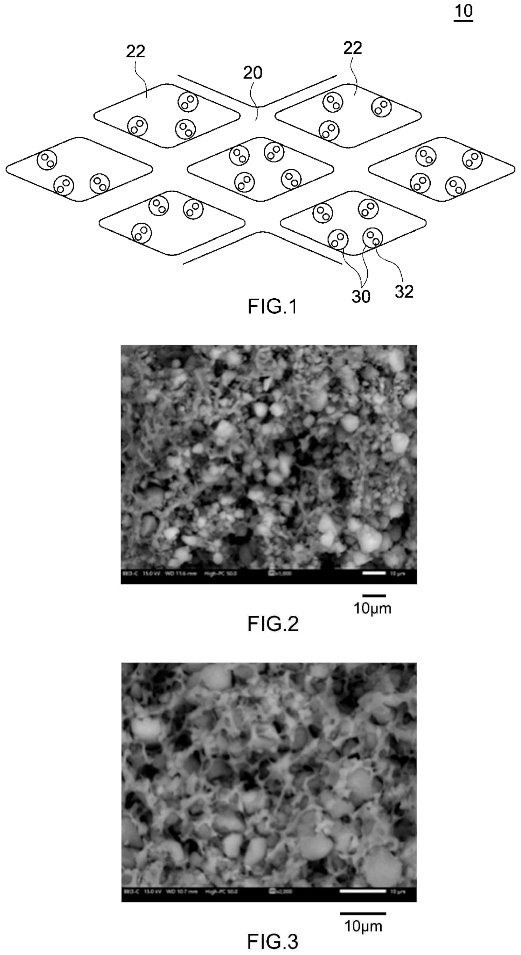

FIG. 1 is a diagram schematically showing the structure of a support structure disclosed herein. As shown in FIG. 1, the support structure 10 disclosed herein includes a resin matrix 20 and porous particles 30. The support structure 10 disclosed herein is a support structure that can support an active material, such as various types of adsorbents and catalysts. The active material may be preferably a $CO_2$ adsorbent that chemically adsorbs carbon dioxide ($CO_2$). Specifically, examples of the $CO_2$ adsorbent include amine compounds having primary to tertiary amino groups, such as an aminoorganosilane, an aliphatic amine, and an aliphatic polyamine. The support structure 10 disclosed herein can be suitably used as a $CO_2$ adsorption material by, for example, supporting a $CO_2$ adsorbent, such as an amine compound that can absorb $CO_2$.

The support structure 10 can be formed into a sheet, rectangular parallelepiped, cube, prism, cylinder, sphere, or the like. The support structure 10 is not particularly limited, but is preferably a support sheet formed into a sheet. When the support structure 10 is sheet-like, for example, the thickness is preferably 0.3 mm or more and 5 mm or less.

The resin matrix 20 included in the support structure 10 disclosed herein has, as shown in FIG. 1, a three-dimensional mesh structure including pores 22. The resin matrix 20 can have a function as a skeleton in the support structure 10. The resin matrix 20 can be configured by, for example, bonding resin crystal particles. The pores 22 may be communication holes communicating with each other. A plurality of porous particles 30 is disposed in the pore 22. The porous particles 30 have a plurality of pores 32. It is preferable that most of the porous particles 30 are present in the pores 22 so as to be separated from the resin matrix 20. It is possible to verify that the support structure 10 includes the resin matrix 20 and the porous particles 30 by, for example, observing the surface or a cross-section of the support structure 10 with a scanning electron microscope (SEM).

The support structure 10 disclosed herein can suitably improve water absorption by disposing the porous particles 30 in the pores 22 of the resin matrix 20. Consequently, the active material can be supported in a larger amount than before, the supporting amount per volume is increased, and the harmful component-collecting or separating performance can be improved. There is not intension to limit the technology disclosed herein, but the reasons for such effects are inferred to be as follows. In the support structure 10, the porous particles 30 are disposed in the pores 22 of the resin matrix 20, and thereby the porous particles 30 can be present without including crushed pores 32 and resin-filled pores 32. In addition, since the resin matrix 20 also includes suitable pores 22, the pores 22 also can support an active material. Consequently, in the support structure 10 disclosed herein, high water absorption can be realized.

As described above, the support structure 10 has a high water absorption rate. The water absorption rate of the support structure 10 based on the Archimedes method disclosed herein is not particularly limited, but is preferably 140% or more, more preferably 145% or more, and further preferably 147% or more and may be 190% or more or may be 200% or more. The support structure 10 has a high water absorption rate, and thereby the amount of a supported active material per volume is increased, and the harmful component-collecting or separating performance can be improved. From such viewpoints, a higher water absorption rate is preferable, and the upper limit is not particularly limited. For example, the water absorption rate of the support structure 10 based on the Archimedes method may be 400% or less, 370% or less, or 350% or less. The "water absorption rate of a support structure" can be calculated based on the Archimedes method. More specifically, the dry weight $W_{Air}$, underwater weight $W_{Aq}$, and wet weight $W_{a+w}$ of a support structure are measured, and the water absorption rate (Aw) can be calculated based on the following equation(1):

$$Aw~(\%) = (W_{a+w} - W_{Air})/W_{Air} \times 100 \qquad (1).$$

The porosity based on the Archimedes method of the support structure 10 disclosed herein is not particularly limited, but is preferably 65% or more, more preferably 70% or more, and further preferably 75% or more. Consequently, a component subjected to collection (e.g., $CO_2$) and an active material (e.g., amine compound) can be brought into suitable contact with each other. The porosity of the support structure 10 based on the Archimedes method is, for example, preferably 90% or less and may be 86% or less. The "porosity of a support structure" can be calculated based on the Archimedes method. More specifically, the dry weight $W_{Air}$, underwater weight $W_{Aq}$, and wet weight $W_{a+w}$ of the support structure are measured, and the porosity (P) can be calculated based on the following equation (2):

$$P~(\%) = (W_{a+w} - W_{Air})/(W_{a+w} - W_{Aq}) \times 100 \qquad (2).$$

The hot water resistance of the support structure 10 is not particularly limited, but is preferably high. The hot water resistance of the support structure 10 is preferably 120°C or more, more preferably 140°C or more and may be 150°C or more or may be 160°C or more. Consequently, even in an environment exceeding 100°C or in a relatively high-humidity environment, the support structure 10 disclosed herein can be suitably used. The hot water resistance of the support structure 10 is, for example, preferably 250°C or less and may be 200°C or less. The "hot water resistance of a support structure" can be evaluated by drying the support structure immersed in hot water in an autoclave and measuring the strength by a conventionally known tension test.

The resin matrix 20 has a three-dimensional mesh structure including a plurality of pores 22. The average pore diameter A of the resin matrix 20 is preferably 0.4 $\mu$m or more, more preferably 0.5 $\mu$m or more, and further preferably 0.56 $\mu$m or more and may be 1 $\mu$m or more. Consequently, the water absorption of the support structure 10 can be suitably improved. When the resin matrix 20 has a too large average pore diameter A, there is a possibility that the porous particles 30 become detached from the resin matrix 20. From such a viewpoint, the resin matrix 20 has an average pore diameter A of, for example, preferably 10 $\mu$m or less, more preferably 7 $\mu$m or less, more preferably 5 $\mu$m or less, and further preferably 3 $\mu$m or less. The "average pore diameter of a resin matrix" can be determined by a mercury press-in method using a commercially available mercury porosimeter.

The resin matrix 20 includes a resin and can be configured by bonding crystal particles of the resin. The resin of the resin matrix 20 is not particularly limited, but is preferably a resin having a glass transition temperature (Tg) of 70°C or more. Consequently, the heat resistance of the support structure 10 is improved. The glass transition temperature of the resin included in the resin matrix 20 is preferably 70°C or more and may be 100°C or more or may be 120°C or more, The glass transition temperature of the resin included in the resin matrix 20 may be, for example, 260°C or less or 250°C or less. The "glass transition temperature of a resin" can be measured according to conventionally known differential scanning calory (DSC) measurement or a dynamic viscoelasticity measurement method (DMA method).

The resin included in the resin matrix 20 is not particularly limited, but is preferably a resin with a high hot water resistance. Consequently, the hot water resistance of the support structure 10 can be improved. The hot water resistance of the resin included in the resin matrix 20 is preferably 120°C or more and more preferably 140°C or more and may be 150°C or more or may be 160°C or more. The hot water resistance of the resin included in the resin matrix 20 is, for example, preferably 300°C or less and may be 250°C or less or may be 200°C or less. As the "hot water resistance or a resin", a nominal value (catalogue value) of each manufacturer may be used.

The content of the resin is not particularly limited, but is preferably 30 mass% or more and 80 mass% or less when the total mass of the support structure 10 is defined as 100 mass%, more preferably 35 mass% or more and 70 mass% or less, further preferably 40 mass% or more and 60 mass% or less, and may be 40 mass% or more and 50 mass% or less. Consequently, the water absorption of the support structure 10 can be suitably improved. In addition, from the viewpoint of further suitably improving the water absorption rate of the support structure 10, the content proportion of the porous particles 30 is preferably higher than that of the resin constituting the resin matrix 20. From such viewpoints, the content of the resin may be less than 50 mass%, for example, may be 40 mass% or more and 48 mass% or less.

The resin component included in the resin matrix 20 is not particularly limited, but examples thereof include an acrylic resin, a cellulose resin, and resins classified in super engineering plastic. The resin matrix 20 may include any one of the above-mentioned resins alone or a combination of two or more thereof.

The acrylic resin encompasses all polymers including alkyl (meth)acrylate as a constituent monomer component and derivatives thereof. The notation of "(meth)acrylate" or the like in the present specification is used as a term that comprehensively means acrylate and/or methacrylate. Examples of the acrylic resin include a polymer including alkyl (meth)acrylate as the main monomer (a component accounting for 50 mass% or more of the total monomers) and a copolymer of such a main monomer and a submonomer copolymerizable with the main monomer. Specifically, examples thereof include poly(meth)acrylic acid, poly(meth)acrylamide, and poly(methyl methacrylate) (PMMA). In particular, the resin matrix 20 preferably includes methacrylic acid or PMMA.

The cellulose resin encompasses all compounds derived from cellulose (cellulose derivatives). Specifically, examples thereof include ethyl cellulose (EC), hydroxyethyl cellulose (HEC), ethyl methyl cellulose (EMC), hydroxyethyl methyl cellulose (HEMC), nitrocellulose, and diacetyl cellulose. In particular, the resin matrix 20 preferably includes ethyl cellulose.

Super engineering plastic is a thermoplastic resin having very high heat resistance and mechanical strength. Specifically, examples of the super engineering plastic include fluorine-based resins such as polytetrafluoroethylene (PTFE), a tetrafluoroethylene-perfluorovinylether copolymer (PFA), a tetrafluoroethylene-hexafluoropropylene copolymer (FEP), a chlorotrifluoroethylene homopolymer (PCTFE), a tetrafluoroethylene-ethylene copolymer (ETFE), a chlorotrifluoroethylene-ethylene copolymer (ECTFE), and a vinylidene fluoride homopolymer (PVDF); thermoplastic polyimides such as polybenzimidazole (PBI), polyimide (PI), polyetherimide (PEI), and polyamideimide (PAI); and polyethersulfone (PES), polyether ether ketone (PEEK), polyethersulfide, and polyphenylenesulfide. In particular, the resin matrix 20 preferably includes PEI, PES, or PVDF.

The porous particles 30 may be any inorganic porous material that can support an active material such as an adsorbent and a catalyst. For example, a porous material having a relatively large specific surface area is preferable. As the porous particles 30, for example, oxides of a metalloid element or a metal element and solid solutions thereof can be preferably used. Specifically, examples thereof include silica particles, alumina particles, ceria particles, zirconia particles, and titania particles. One or more kinds of these particles can be used without any limitation. In particular, the porous particles 30 preferably include silica particles.

The porous particles 30 include a plurality of pores 32. The porous particles 30 can be, for example, a mesoporous material having mesopores. The "mesopore" means a pore having a pore diameter within a range of 2 nm or more and less than 50 nm based on the IUPAC classification. The average pore diameter B of the porous particles 30 is, for example, preferably 2 nm or more, more preferably 10 nm or more, and further preferably 12 nm or more. Consequently, when supported, an active material can be suitably introduced into the pores 32. The average pore diameter B of the porous particles 30 is, for example, preferably 100 nm or less, more preferably 70 nm or less, further preferably 50 nm or less, further preferably less than 50 nm, such as 40 nm or less, and particularly preferably 30 nm or less. Consequently, the specific surface area of the porous particles 30 can be suitably increased, and the water absorption of the support structure 10 can be further improved. The "average pore diameter of porous particles" can be measured for a support structure through the pore diameter distribution by a gas adsorption method based on a BJH method using a commercially available pore diameter distribution measurement apparatus.

The average particle diameter of the porous particles 30 is not particularly limited. When the porous particles 30 have a too small average particle diameter, the porous particles 30 tend to be hardly dispersed in the support structure 10.

From such a viewpoint, the average particle diameter of the porous particles 30 may be, for example, 100 nm or more, 1 $\mu$m or more, 3 $\mu$m or more, or 5 $\mu$m or more. In contrast, since the porous particles 30 include a large number of gaps (pores 32) as described above, when the average particle diameter is too large, the porous particles 30 may tend to break by collisions between porous particles. From such a viewpoint, the average particle diameter of the porous particles 30 may be, for example, 100 $\mu$m or less or 50 $\mu$m or less or 15 $\mu$m or less. In the present specification, the "average particle diameter of porous particles" refers to the arithmetic average value of circle equivalent diameters measured based on optical microscopic observation. Here, the circle equivalent diameter refers to the diameter of a circle having the same area as the area of an ellipse formed by the major axis, which is the longest diameter of a porous particle observed in a microscopic image, and a minor axis, which is the longest diameter in the lines intersecting the major axis at a right angle. In the present specification, the average particle diameter of porous particles refers to the arithmetic average value of circle equivalent diameters of randomly selected 200 porous particles.

From the viewpoint of increasing the contact area between an active material and a harmful component, a larger specific surface area of the porous particles 30 is preferable. The specific surface area (BET specific surface area) of the porous particles 30 measured by the BET method is not particularly limited, but is preferably, for example, 190 $m^2/g$ or more and 650 $m^2/g$ or less and more preferably 200 $m^2/g$ or more and 450 $m^2/g$ or less. In the present specification, the "BET specific surface area of porous particles" can be measured by a nitrogen adsorption method using a commercially available specific surface area measurement apparatus.

From the viewpoint of increasing the amount of a supported active material, a higher oil-absorbing amount of the porous particles 30 is preferable. The oil-absorbing amount of the porous particles 30 is not particularly limited, but is preferably, for example, 100 mL/100 g or more and 400 mL/100 g or less and more preferably 130 mL/100 g or more and 380 mL/100 g or less. The "oil-absorbing amount of porous particles" can be measured in conformity to JIS K6217-4 (2008) with a common absorption measurement apparatus using DBP (dibutyl phthalate) as a reagent liquid.

The content of the porous particles 30 is not particularly limited, but is preferably 20 mass% or more and 70 mass% or less when the total mass of the support structure 10 is defined as 100 mass%, more preferably 30 mass% or more and 65 mass% or less, and further preferably 40 mass% or more and 60 mass% or less and may be 50 mass% or more and 60 mass% or less. Consequently, the water absorption of the support structure 10 can be suitably improved. From the viewpoint of further suitably improving the water absorption rate of the support structure 10, it is preferable that the content proportion of the porous particles 30 is higher than that of the resin component. From such a viewpoint, the content of the porous particles 30 may be greater than 50 mass% and may be, for example, 52 mass% or more and 60 mass% or less.

In the support structure 10, the ratio of the average pore diameter A of the resin matrix 20 to the average pore diameter B of the porous particles 30, (A/B), is not particularly limited, but is preferably 20 or more and 200 or less and more preferably 24 or more and 165 or less and may be 50 or more and 120 or less. That is, the support structure 10 preferably has a structure including both relatively small pores (e.g., mesopores of less than 50 nm) derived from the porous particles 30 and relatively large pores (e.g., pores of 0.5 $\mu$m or more) derived from the pores 22 of the resin matrix 20. Consequently, the water absorption of the support structure 10 can be suitably improved.

In the support structure 10, the mass ratio of the porous particles 30 and the resin constituting the resin matrix 20 is not particularly limited, but is, for example, preferably 20:80 to 70:30, more preferably 30:70 to 65:35, and further preferably 40:60 to 65:35. Consequently, the balance between the average pore diameter A derived from the resin matrix 20 and the average pore diameter B derived from the porous particles 30 is suitably adjusted, and the water absorption rate of the support structure 10 can be improved.

<Manufacturing method of support structure>

Then, an example of the method of manufacturing the support structure 10 disclosed herein will be described. The support structure 10 disclosed herein can include a preparation step of preparing a slurry for forming a support structure, a molding step of producing a molded product from the slurry for forming a support structure, an immersion step of immersing the molded product in an aqueous solvent, and a drying step of drying the molded product after the immersion step. The support structure 10 disclosed herein is not limited to those manufactured by the following manufacturing method.

The preparation step prepares a slurry composition (support structure-forming slurry) at least including the porous particles 30, a resin, and an organic solvent. As an example, in the preparation step, the porous particles 30 are charged in the organic solvent, and the mixture is stirred. Consequently, the porous particles 30 are dispersed in the organic solvent. Subsequently, a resin is charged and stirred in the organic solvent in which the porous particles 30 are dispersed. Consequently, the resin is dissolved in the organic solvent. The preparation step is not particularly limited, but may be performed by charging the porous particles 30 and a resin in an organic solvent and stirring the mixture under heating at 40°C to 60°C.

As the porous particles 30, the above-described porous particles 30 can be suitably used. In particular, silica particles are preferably used. As the resin, a resin that is dissolved in an organic solvent and precipitates in a network structure in the immersion step described below can be suitably used. In particular, PEI, PES, or PVDF is preferably used. The porous particles 30 and the resin are mixed at a mass ratio of, for example, preferably 20:80 to 70:30, more preferably 30:70 to 65:35, and further preferably 55:45 to 65:35.

The organic solvent is not particularly limited as long as it can dissolve a resin. Examples of the organic solvent include amides, such as diethylformamide, dimethylacetamide, dimethylformamide, N-methylpyrrolidone, and dimethylimidazolidinone; alkyl ketones, such as dimethyl sulfoxide, acetone, and methyl ethyl ketone; ethers, such as tetrahydrofuran, dioxane, and diglyme; and glycol ethers, such as ethylene glycol and diethylene glycol. These organic solvents may be used alone or in combination of two or more thereof. The mass ratio of the organic solvent included in the slurry for forming a support structure is not particularly limited. The content of the organic solvent accounting for the slurry for forming a support structure is, for example, preferably 30 mass% to 80 mass%. Consequently, a molded product can be suitably produced in the molding step.

The slurry for forming a support structure may contain a conventionally known additive as long as the effects of the technology disclosed herein are not significantly impaired. Examples of the additive include a dispersant, a plasticizer, a defoamer, and a thickener. For example, as the additive, a hydrophilic polymer such as polyethylene glycol (PEG) can be preferably used. The content of the additive in the slurry for forming a support structure is, for example, preferably 30 mass% or less and may be 20 mass% or less or 10 mass% or less.

In the molding step, a molded product is molded using the above-prepared slurry for forming a support structure. For example, a sheet-like molded product can be produced by supplying the slurry for forming a support structure on a glass substrate using a doctor blade at a predetermined thickness. Alternatively, a molded product with a desired shape can be produced by extruding the slurry for forming a support structure into a predetermined shape, printing it on a metal plate or metal mesh, and dip-coating it on a core material.

In the immersion step, the molded product prepared in the molding step is immersed in an aqueous solvent (e.g., water). Consequently, the organic solvent included in the molded product is replaced with the aqueous solvent, and the resin precipitates. The position where the organic solvent included in the molded product is replaced with the aqueous solvent becomes a pore 22, and the above-described resin matrix 20 is suitably formed when the resin precipitates. Since the porous particles 30 are dispersed in the organic solvent, the resin matrix 20 is formed so as to enclose the porous particles 30, and the porous particles 30 are disposed in the pores 22 of the resin matrix 20.

The aqueous solvent that is used in the immersion step is not particularly limited. The aqueous solvent may be, for example, water, a mixture solution of water and alcohol, or water containing a surfactant. As the aqueous solvent, ion-exchanged water (deionized water), pure water, ultrapure water, distilled water, or the like can be used.

In the drying step, the molded product after the immersion step is dried to remove the aqueous solvent from the molded product. Consequently, the support structure 10 having the above-described structure can be suitably produced. The drying method in the drying step is not particularly limited, and, for example, a hot-air dryer, a low humidity air dryer, a vacuum dryer, various infrared dryers, an electromagnetic induction dryer, a microwave dryer, and drying promotion means such as dry air, air blowing, reduced pressure, heating, or the like can be used alone or in combination. The drying temperature in the drying step (such as the setting temperature of a dryer) can be appropriately selected depending on the type and amount of the solvent in the mixture, but can be set to, for example, 60°C to 150°C and preferably 80°C to 120°C. The drying time may also be appropriately selected depending on the type and amount of the aqueous solvent and is not particularly limited.

As in above, the support structure 10 with high water absorption can be produced. Such a support structure 10 can be suitably used as a support for supporting an active material, in particular, as a support that supports an amine solution absorbing $CO_2$.

<Test Examples>

Test Examples of the technology disclosed herein will now be described, but it is not intended that the technology disclosed herein is limited to the Test Examples.

<Production of support structure>

(Example 1)

First, porous silica particles ($SiO_2$, average particle diameter: 9 $\mu$m, 135 g) as porous particles, a polyether imide (PEI, 80 g) as a resin, dimethyl sulfoxide (DMSO, 500 g) as an organic solvent, and polyethylene glycol (PEG, 28 g) as an additive were provided. A slurry for forming a support structure of Example 1 was prepared from them. Secondly, the slurry for forming a support structure of Example 1 was applied on a glass substrate at a thickness of 2 mm using a doctor blade to obtain a sheet-like molded product. The sheet-like molded product was immersed in water for 24 hours. The molded product after immersion in water was then dried at 80°C for 5 hours to obtain a support structure (support sheet) of Example 1 formed into a sheet-like shape.

(Example 2)

In Example 2, $SiO_2$ having an average particle diameter of 6 $\mu$m was used as the porous particles. A slurry for forming a support structure of Example 2 was prepared by mixing the materials at a mass ratio of $SiO_2$:PEI:DMSO:PEG of 18:11:67:4. The slurry was molded into a sheet-like shape as in Example 1, and the sheet was immersed in a solution of a mixture of water and ethanol at 5:95 for 24 hours. A support structure of Example 2 formed into a sheet-like shape was obtained as in Example 1 except the above.

(Example 3)

In Example 3, N-methylpyrrolidone (NMP) was used as the solvent. A slurry for forming a support structure of Example 3 was prepared by mixing the materials at a mass ratio of $SiO_2$:PEI:NMP:PEG of 18:11:67:4. A support structure of Example 3 formed into a sheet-like shape was obtained as in Example 1 except the above.

(Example 4)

In Example 4, $SiO_2$ having an average particle diameter of 6 $\mu$m was used as the porous particles. A slurry for forming a support structure of Example 4 was prepared by mixing the materials at a mass ratio of $SiO_2$:PEI:DMSO:PEG of 14:8:51:27. A support structure of Example 4 formed into a sheet-like shape was obtained as in Example 1 except the above.

(Example 5)

In Example 5, $SiO_2$ having an average particle diameter of 6 $\mu$m was used as the porous particles, and polyether sulfone (PES) was used as the resin. A slurry for forming a support structure of Example 5 was prepared by mixing the materials at a mass ratio of $SiO_2$:PES:NMP:PEG of 18:11:67:4. A support structure of Example 5 formed into a sheet-like shape was obtained as in Example 1 except the above.

(Example 6)

In Example 6, NMP was used as the solvent. A slurry for forming a support structure of Example 6 was prepared by mixing the materials at a mass ratio of $SiO_2$:PEI:NMP:PEG of 16:20:60:4. A support structure of Example 6 formed into a sheet-like shape was obtained as in Example 1 except the above.

(Example 7)

In Example 7, PES was used as the resin, and N-methylpyrrolidone (NMP) was used as the solvent. A slurry for forming a support structure of Example 7 was prepared by mixing the materials at a mass ratio of $SiO_2$:PES:NMP:PEG of 24:13.5:56:6.5. A support structure of Example 7 formed into a sheet-like shape was obtained as in Example 1 except the above.

(Example 8)

In Example 8, PEI and polymethyl methacrylate (PMMA) were used as the resin, and N-methylpyrrolidone (NMP) was used as the solvent. A slurry for forming a support structure of Example 7 was prepared by mixing the materials at a mass ratio of $SiO_2$:PEI:PMMA:NMP:PEG of 16:10:10:60:4. A support structure of Example 8 formed into a sheet-like shape was obtained as in Example 1 except the above.

(Example 9)

In Example 9, PEI and ethyl cellulose (EC) were used as the resin, and N-methylpyrrolidone (NMP) was used as the solvent. A slurry for forming a support structure of Example 9 was prepared by mixing the materials at a mass ratio of $SiO_2$:PEI:EC:NMP:PEG of 16:10:10:60:4. A support structure of Example 9 formed into a sheet-like shape was obtained as in Example 1 except the above.

(Example 10)

In Example 10, 10 g of porous silica particles (SiO$_2$, average particle diameter: 6 $\mu$m) as the porous particles was provided. The porous silica particles were press-molded using a mold and a press to obtain a molded product having a diameter of 15 mm and a thickness of 2 mm. The molded product was dried at 800°C for 2 hours to obtain a support structure of Example 10.

(Example 11)

In Example 11, PES was used as the resin, and NMP was used as the solvent. A slurry for forming a support structure of Example 11 was prepared by mixing the materials at a mass ratio of SiO$_2$:PES:NMP:PEG of 18:10.8:67:4.2. A support structure of Example 11 formed into a sheet-like shape was obtained as in Example 1 except the above.

<Measurement of average pore diameter of resin matrix>

The average pore diameter of the resin matrix included in the support structure of each Example was measured using a mercury press-in method. Specifically, the support structure of each Example was cut out to a size of about 5 mm $\times$ 5 mm and was pre-treated by heating at 120°C for 3 hours. Subsequently, mercury was introduced using a mercury porosimeter (manufactured by Micromeritics Instrument Corporation, Auto Pore IV 9500) in a range of 0.10 to 60,000 psia to obtain a pore distribution of each Example. The average pore diameter A ($\mu$m) of the resin matrix included in the support structure of each Example was calculated from the peak position of the obtained pore distribution. The results are shown in Table 1. Example 10 did not include a resin, but the pore diameter calculated by the same method as in above was used as the average pore diameter A, and the result is shown in Table 1.

<Measurement of average pore diameter of porous particles>

The average pore diameter of the porous particles included in the support structure of each Example was measured using a nitrogen gas adsorption method. Specifically, the support structure of each Example was cut out to a size of about 5 mm $\times$ 5 mm and was pre-treated by retaining at 120°C under vacuum for 3 hours. Then, an adsorption isotherm of each Example was determined using a pore diameter distribution measurement apparatus (manufactured by MicrotracBEL Corporation, BELSORP MINI) by nitrogen gas introduction at 77 k. The obtained adsorption isotherm was converted into a pore distribution by a BJH method, and the pore volume V (cm/g) and specific surface area S (m$^2$/g) were determined. The average pore diameter B (nm) of the porous particles included in the support structure of each Example was calculated from the expression: average pore diameter B (nm) = 4V/S. The results are shown in Table 1.

<Measurement of water absorption rate and porosity>

The water absorption rate and porosity based on the Archimedes method of the support structure of each Example were measured. Specifically, first, the dry weight $W_{Air}$ of the support structure of each Example was measured. Secondly, the support structure of each Example was immersed in distilled water and was then placed in a desiccator equipped with a vacuum pump, vacuum drawing was performed for 45 minutes, and the underwater weight $W_{Aq}$ and wet weight $W_{a+w}$ were measured. The water absorption rate (Aw) was calculated based on the following equation (3). The porosity (P) was calculated based on the following equation (4). The results are shown in Table 1.

$$Aw\ (\%) = (W_{a+w} - W_{Air})/W_{Air} \times 100 \qquad (3)$$

$$P\ (\%) = (W_{a+w} - W_{Air})/(W_{a+w} - W_{Aq}) \times 100 \qquad (4)$$

<Observation of support structure>

A cross-section of the support structure of Example 3 was observed using a scanning electron microscope (SEM). Fig. 2 shows an SEM photograph (magnification: 1000$\times$) of Example 2, and Fig. 3 shows an SEM photograph (magnification: 2000$\times$) of Example 3.

[Table 1]

Table 1

| | Pore diameter | | | Water absorption rate (%) | Porosity (%) |
|---|---|---|---|---|---|
| | Average pore diameter A of resin matrix ($\mu$m) | Average pore diameter B of porous particles ($\mu$m) | Pore diameter ratio (A/B) | | |
| Example 1 | 1.60 | 16.70 | 95.8 | 174.1 | 75.6 |
| Example 2 | 0.56 | 22.6 | 24.8 | 225.5 | 79.8 |
| Example 3 | 1.60 | 16.54 | 96.7 | 196.4 | 76.8 |
| Example 4 | 1.05 | 17.63 | 59.6 | 348.9 | 85.7 |
| Example 5 | 1.46 | 16.8 | 86.9 | 212.5 | 77.7 |
| Example 6 | 1.89 | 12.9 | 146.5 | 147.4 | 70.5 |
| Example 7 | 3.00 | 25.7 | 116.7 | 178.0 | 75.5 |
| Example 8 | 2.11 | 13.1 | 161.1 | 148.3 | 68.9 |
| Example 9 | 1.29 | 14.6 | 88.4 | 147.3 | 69.4 |
| Example 10 | 0.3*1 | 18.1 | 16.6 | 125.4 | 73.5 |
| Example 11 | 4.98 | 36.8 | 135.3 | 182.5 | 75.3 |
| *1: Example 10 did not include a resin, but the pore diameter calculated by the same measuring method as in Examples 1 to 9 is shown as the average pore diameter A. | | | | | |

As shown in Table 1, it was demonstrated that in Examples 1 to 9 and 11, the water absorption rate was 147% or more. This is inferred because in Examples 1 to 9 and 11, the resin matrix had a three-dimensional mesh structure including pores and had a structure in which porous particles were disposed in the pores of the resin matrix, and thereby suitable water absorption was exhibited. In contrast, it was demonstrated that in the support structure of Example 10 that did not include a resin and was constituted of porous particles, the porosity was higher than those in Examples 6, 8, and 9, but the water absorption rate was lower than those in Examples 6, 8, and 9. This is inferred because a large number of mesopores derived from porous particles were present in Example 10, but there were no pores having a relatively large size of greater than 0.5 $\mu$m derived from the resin matrix, and the water absorption was not suitably improved.

Examples of the technology disclosed herein have been described in detail above, but they are merely examples and do not limit the scope of the claims. The technology described in the claims includes various modifications and alternations of the specific examples given above.

The technology disclosed herein encompasses the following items 1 to 8. The following items 1 to 8 are not limited to the above embodiments.

Item 1 relates to a support structure for supporting an active material. The support structure in Item 1 comprises:

a resin matrix; and
porous particles including mesopores,
wherein,
the resin matrix has a three-dimensional mesh structure including pores, and
the porous particles are disposed in the pores of the resin matrix.

Item 2 relates to the support structure according to Item 1, wherein

the resin matrix has an average pore diameter A of 0.5 $\mu$m or more and 10 $\mu$m or less, or
the porous particles have an average pore diameter B of 10 nm or more and 50 nm or less, or
the resin matrix has an average pore diameter A of 0.5 $\mu$m or more and 5 $\mu$m or less, and the porous particles have an average pore diameter B of 10 nm or more and 40 nm or less.

Item 3 relates to the support structure according to Item 1 or 2, wherein
a ratio of the average pore diameter A of the resin matrix to the average pore diameter B of the porous particles, (A/B), is 20 or more and 200 or less.

Item 4 relates to the support structure according to any one of Items 1 to 3, wherein
a porosity based on an Archimedes method is 75% or more and 90% or less.

Item 5 relates to the support structure according to any one of Items 1 to 4, wherein
a water absorption rate based on an Archimedes method is 145% or more and 350% or less.

Item 6 relates to the support structure according to any one of Items 1 to 5, wherein
a hot water resistance is 120°C or more and 250°C or less.

Item 7 relates to the support structure according to any one of Items 1 to 6, wherein
the resin matrix includes a resin having a glass transition temperature of 70°C or more and 250°C or less.

Item 8 relates to the support structure according to any one of Items 1 to 7, wherein
the porous particles include at least one kind selected from the group consisting of silica particles, alumina particles, ceria particles, zirconia particles, and titania particles.

**Industrial Applicability**

According to the present invention, a support structure having excellent water absorption can be provided.

**Reference Signs List**

10    support structure
20    resin matrix
22    pore
30    porous particle
32    pore

**Claims**

1. A support structure for supporting an active material, comprising:

   a resin matrix; and
   porous particles including a plurality of mesopores,
   wherein,
   the resin matrix has a three-dimensional mesh structure including pores, and
   the porous particles are disposed in the pores of the resin matrix.

2. The support structure according to claim 1, wherein
   the resin matrix has an average pore diameter A of 0.5 $\mu$m or more and 10 $\mu$m or less.

3. The support structure according to claim 1, wherein
   the porous particles have an average pore diameter B of 10 nm or more and 50 nm or less.

4. The support structure according to claim 1, wherein

   the resin matrix has an average pore diameter A of 0.5 $\mu$m or more and 5 $\mu$m or less, and
   the porous particles have an average pore diameter B of 10 nm or more and 40 nm or less.

5. The support structure according to any one of claims 1 to 4, wherein
   a ratio of the average pore diameter A of the resin matrix to the average pore diameter B of the porous particles, (A/B), is 20 or more and 200 or less.

6. The support structure according to any one of claims 1 to 4, wherein
   a porosity based on an Archimedes method is 75% or more and 90% or less.

7. The support structure according to any one of claims 1 to 4, wherein

a water absorption rate based on an Archimedes method is 145% or more and 350% or less.

8. The support structure according to any one of claims 1 to 4, wherein
a hot water resistance is 120°C or more and 250°C or less.

9. The support structure according to any one of claims 1 to 4, wherein
the resin matrix includes a resin having a glass transition temperature of 70°C or more and 250°C or less.

10. The support structure according to any one of claims 1 to 4, wherein
the porous particles include at least one kind selected from the group consisting of silica particles, alumina particles, ceria particles, zirconia particles, and titania particles.

10

FIG.1

10μm

FIG.2

10μm

FIG.3

## INTERNATIONAL SEARCH REPORT

| International application No. |
|---|
| **PCT/JP2024/026074** |

**A. CLASSIFICATION OF SUBJECT MATTER**

**B01J 20/28**(2006.01)i; **B01J 20/24**(2006.01)i; **B01J 20/26**(2006.01)i; **B01J 31/26**(2006.01)i; **B01J 32/00**(2006.01)i; **B01J 35/56**(2024.01)i; **B01J 35/60**(2024.01)i

FI: B01J20/28 Z; B01J35/56 301Z; B01J35/60 G; B01J32/00; B01J31/26 M; B01J20/26 D; B01J20/24 B

According to International Patent Classification (IPC) or to both national classification and IPC

**B. FIELDS SEARCHED**

Minimum documentation searched (classification system followed by classification symbols)

B01J20/00-20/28; B01J20/30-20/34; B01J21/00-38/74; H01M4/86-4/98

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-141836 A (NAMIKI, Sadanao) 29 August 2019 (2019-08-29)<br>paragraphs [0007]-[0067], fig. 2 | 1-10 |
| Y | JP 2006-347849 A (KABUSHIKI KAISHA TOYOTA CHUO KENKYUSHO) 28 December 2006 (2006-12-28)<br>paragraph [0002] | 1-10 |
| A | JP 2014-221470 A (COMMISSARIAT A L'ENERGIE ATOMIQUE ET AUX ENERGIESALTERNATIVES) 27 November 2014 (2014-11-27)<br>entire text, all drawings | 1-10 |
| A | JP 2023-059875 A (W.L. GORE & ASSOCIATES, INC.) 27 April 2023 (2023-04-27)<br>entire text, all drawings | 1-10 |
| A | WO 2006/126387 A1 (NATIONAL UNIVERSITY CORPORATION KYOTO INSTITUTE OF TECHNOLOGY) 30 November 2006 (2006-11-30)<br>entire text, all drawings | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/026074**

| Patent document cited in search report | | | Publication date (day/month/year) | Patent family member(s) | | | Publication date (day/month/year) |
|---|---|---|---|---|---|---|---|
| JP | 2019-141836 | A | 29 August 2019 | (Family: none) | | | |
| JP | 2006-347849 | A | 28 December 2006 | (Family: none) | | | |
| JP | 2014-221470 | A | 27 November 2014 | (Family: none) | | | |
| JP | 2023-059875 | A | 27 April 2023 | EP | 4234077 | A1 | |
| | | | | whole document | | | |
| WO | 2006/126387 | A1 | 30 November 2006 | US | 2009/0045119 | A1 | |
| | | | | whole document | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023140985 A
- WO 2014533195 A
- WO 2018505071 A